# EUROPEAN PATENT SPECIFICATION

(11) **EP 4 554 816 B1**
(45) Date of publication and mention of the grant of the patent: **11.03.2026**
(21) Application number: 23735782.7
(22) Date of filing: 29.06.2023
(51) Int. Cl.: B60P 7/08

(54) **RETRACTABLE DRIVE FORMATION**
EINZIEHBARE ANTRIEBSFORMATION
FORMATION D'ENTRAÎNEMENT RÉTRACTABLE

(30) Priority: 11.07.2022 EP 22184144
(43) Date of publication of application: 21.05.2025
(73) Proprietor: Smart Flow Europe SA, 7700 Mouscron (BE)
(72) Inventor: DELVIGNE, Christian, 59700 Marcq-en-Baroeul (FR)
(74) Representative: De Clercq & Partners
(86) International application number: PCT/EP2023/067848
(87) International publication number: WO 2024/012890

(56) References cited:
- CN-A- 109 733 659
- US-A1- 2015 040 359
- US-A1- 2018 334 075

## Description

### FIELD OF THE INVENTION

The present invention relates to the technical field of drive formations, and more particular to drive formation that can be used in the field of packaging, such as in strap tensioning assemblies, to secure a load in of for example a pallet.

### BACKGROUND OF THE INVENTION

Drive formations are known, for example from document CN 109 733 659 B.

Sometimes drive formations must be built into a rather narrow space, because it has to drive a system that has to be built in a small or thin object. In those situations, the drive formation might not always be easily accessible. Hence, there is a need for easily accessible and manually operatable drive formations. There is also a need for drive formations which avoid overtightening the system that they drive. Such drive formations avoid damage to the system and/or to the drive formation itself. There is a need for drive formations which easily allow an operator to repeat a certain act or to produce similar results every time he operates the drive formation. There is also a need for a drive formation that, after use, is protected from external damage. There is therefore a need to robust and/or heavy-duty drive formations. For example, there is a need for drive formations that can be used in the packaging industry, such in a lid that can be used to secure loads to a pallet, wherein the drive formations can be used to tighten straps that are built into the lid, and wherein the straps can be used to secure the load. In such an example, there is a need for the lid to be as thin, and preferably for the drive formation to be placed in a recess when not in use, so that the drive formation is protected during shipping and handling of the lids. Even more for such an example, there is also a need for the for a drive formation that can deliver the right amount of torque every time that operator applies the straps and provided tension in the straps.

### SUMMARY OF THE INVENTION

It has now surprisingly been found that some or all of the above demands and objectives can be attained either individually or in any combination by a drive formation which comprises a torque limiter, which upon slip of the torque limiter, the handle of the drive formation is at least partially retracted from an extended position.

In particular, the present invention provides in a drive formation, comprising:
- a housing;
- a shaft, comprising a proximal end placed outside the housing, and a distal end placed inside the housing;
   wherein the shaft is axially movable between a retracted position and an extended position;
- a grip, revolutely attached to the proximal end of the shaft;
- a torque transmission, rotationally fixed to the shaft, wherein the torque transmission is configured to transfer torque to a secondary system;
- a first spring element, configured for favouring the shaft in the retracted position;
- a locking element, configured for locking the shaft in the extended position;
- a torque limiter, wherein the torque limiter comprises a slip coupling between a first coupling half and a second coupling half;
   wherein the first coupling half is rotationally fixed to the grip;
   wherein the second coupling half is rotationally fixed to the shaft;
   wherein slip of the torque limiter causes translation of the second coupling half relative to the first coupling half in a direction along the axis of the shaft; and,
   wherein the second coupling half is configured to, upon axial movement, unlock the locking element, thereby causing the first spring element to move the shaft towards the retracted position.

In some embodiments, the shaft is a hollow shaft.

In some embodiments, the first coupling half and/or the second coupling half are at least partially configured inside the hollow shaft.

In some embodiments, a sliding member is placed inside the hollow shaft, configured to transfer translation from the second coupling half towards the distal end of the shaft.

In some embodiments, the contact surface of the first coupling half and the contact surface of the second coupling half comprises form congruent protrusions and/or indentations, preferably acute or triangular protrusions and/or indentations.

In some embodiments, a second spring element press the first coupling half and the second coupling have together along their respective contact surfaces.

In some embodiments, a locking element is pivotably attached to the inside of the housing.

In some embodiments, the locking element comprises a hook, configured to hook the distal end of the shaft, thereby preventing movement of the hollow shaft towards the retracted position.

In some embodiments, the locking element comprises a guiding member, configured to translate the translation of the second coupling half in a motion to unlock the locking element.

In some embodiments, the translation of the second coupling half, results in a translation of a release-member beyond the distal end of the shaft, thereby interaction with the obliqui surface or the guiding member, causing the hook or latch to disengage with the shaft.

In some embodiments, the grip is revolutely attached to the proximal end of the shaft and axially fixed to the proximal end of the shaft.

The invention provides in a strap tensioning assembly, comprising:
- a strap;
- a retracting spool, formed by a barrel and at least a first flange, preferably wherein the retracting spool is configured for by default retracting the strap, thereby winding the strap around the barrel of the retracting spool;
- a ring gear, comprising gear teeth, preferably arranged in a circle; wherein the ring gear is attached to or integrated in the first flange;
- a worm screw, engageable and disengageable with the ring gear;
- a drive formation according to according to an embodiment described herein, for rotating the worm screw; and,
- a selecting mechanism, for engaging and disengaging the worm screw with the ring gear.

The invention provides in a rigid cover (15) comprising one or more the strap tensioning assemblies (1) according to an embodiment described herein.

The invention provides in a pallet comprising one or more the strap tensioning assemblies (1) according to according to an embodiment described herein.

The invention provides in a box, comprising a rigid cover according to according to an embodiment described herein.

The independent and dependent claims set out particular and preferred features of the invention. Features from the dependent claims may be combined with features of the independent or other dependent claims as appropriate.

The present invention will now be further described. In the following passages, different aspects of the invention are defined in more detail. Each aspect so defined may be combined with any other aspect or aspects unless clearly indicated to the contrary. In particular, any feature or statement indicated as being preferred or advantageous may be combined with any other features or statements indicated as being preferred or advantageous.

### BRIEF DESCRIPTION OF THE FIGURES

**Figure 1a** **and** **Figure 1b** depict a strap tensioning assembly according to an embodiment of the invention, with the drive formation in the retracted position.
**Figure 2a****,** **Figure 2b****,** **Figure2c****, and** **Figure 2d****,** depict the same embodiment as shown in Figure 1a and 1b, however with the drive formation in the extended position.
**Figure 3** depict the same embodiment as shown in Figure 1a and 1b and in Figure 2a, 2b, 2c and 2d, however the drive formation is shown at the moment slip occurs in slip coupling between the first coupling half (31) and the second coupling half (32) in the torque limiter (30).
**Figure 4** depicts an exploded view of the drive formation depicted in in Figure 1a and 1b, Figure 2a, 2b, 2c and 2d and Figure 3. As shown in the figure, the handle is made from two halves (11a and 11b).
**Figure 5a** shows a perspective view of a rigid cover comprising two strap tensioning assemblies according to an embodiment of the invention.

### DETAILED DESCRIPTION OF THE INVENTION

When describing the invention, the terms used are to be construed in accordance with the following definitions, unless a context dictates otherwise.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

In the following passages, different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

Reference throughout this specification to "one embodiment" or "an embodiment" means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the following claims and statements, any one of the embodiments can be used in any combination.

The terms "comprising", "comprises" and "comprised of" as used herein are synonymous with "including", "includes" or "containing", "contains", and are inclusive or open-ended and do not exclude additional, non-recited members, elements, or method steps. It will be appreciated that the terms "comprising", "comprises" and "comprised of" as used herein comprise the terms "consisting of", "consists" and "consists of".

As used in the specification and the appended claims, the singular forms "a", "an," and "the" include plural referents unless the context clearly dictates otherwise. By way of example, "a step" means one step or more than one step.

Unless defined otherwise, all technical and scientific terms used herein have the same meaning as is commonly understood by one of skill in the art.

The recitation of numerical ranges by endpoints includes all integer numbers and, where appropriate, fractions subsumed within that range (e.g., 1 to 5 can include 1, 2, 3, 4 when referring to, for example, a number of elements, and can also include 1.5, 2, 2.75 and 3.80, when referring to, for example, measurements). The recitation of endpoints also includes the end point values themselves (e.g., from 1.0 to 5.0 includes both 1.0 and 5.0). Any numerical range recited herein is intended to include all sub-ranges subsumed therein.

The term "about" as used herein when referring to a measurable value such as a parameter, an amount, a temporal duration, and the like, is meant to encompass variations of +/-10% or less, preferably +/-5% or less, more preferably +/-1% or less, of and from the specified value, insofar such variations are appropriate to perform in the disclosed invention. It is to be understood that the value to which the modifier "about" refers is itself also specifically, and preferably, disclosed.

The terms "wt%", "vol%", or "mol%" refers to a weight percentage of a component, a volume percentage of a component, or molar percentage of a component, respectively, based on the total weight, the total volume of material, or total moles, that includes the component.

When describing the present invention, the terms used are to be construed in accordance with the following definitions, unless a context dictates otherwise.

The present invention is based on the finding that the movement between he two halves of a slip torque limiter can be used to unlock a locking element, which hold a shaft or grip temporary in an extended position. This way the shaft or grip can be returned to its biased position or the retracted position upon slip. The retracted position can for example be biased by the presence of a spring element. This way, drive formation can be built that is at least partly sheltered in the retracted position, but which still can be accessed easily when placed in the extended position. The

The present invention provides in a drive formation, comprising:
- a housing;
- a shaft, comprising a proximal end placed outside the housing, and a distal end placed inside the housing;
   wherein the shaft is axially movable between a retracted position and an extended position;
- a grip, revolutely attached to the proximal end of the shaft;
- a torque transmission, rotationally fixed to the shaft, wherein the torque transmission is configured to transfer torque to a secondary system;
- a first spring element, configured for favouring the shaft in the retracted position;
- a locking element, configured for locking the shaft in the extended position;
- a torque limiter, wherein the torque limiter comprises a slip coupling between a first coupling half and a second coupling half;
   wherein the first coupling half is rotationally fixed to the grip;
   wherein the second coupling half is rotationally fixed to the shaft;
   wherein slip of the torque limiter causes translation of the second coupling half relative to the first coupling half in a direction along the axis of the shaft; and,
   wherein the second coupling half is configured to, upon axial movement, unlock the locking element, thereby causing the first spring element to move the shaft towards the retracted position.

Such a drive formation has the advantage that the grip is capable of being retracted or partially retracted upon slip of the torque limiter, for example retraction in the housing or into a recess. This retraction can be used as an indication that a certain amount of tension or torque is delivered to the secondary system. Such a drive formation makes it possible to easily reproduce the same amount of tension or torque delivered to the secondary system. The retraction of the grip may protect the grip from damage, as the grip may be retracted into a more sheltered position. The drive formation can be used that only during manipulation of the grip, the grip is brought into the extended position. The drive formation is by the torque limiter protection of applying too much torque, thereby avoiding breakage of components.

The term "rotationally fixed" as used herein refers to components that are rotationally fixed to each other, rotate together, preferably around the same axis. When one component rotates the other component must rotate as well, as they are rotationally fixed to each other.

Ther term "revolutely attached" as used herein refers to components that are revolutely attached to each other when the components are attached to each other, however, one of the components is able to revolve around the other one. Hence, rotation of one the components does not automatically lead to rotation of the other component.

In some embodiments, the shaft is placed through an aperture in the housing, preferably wherein the distal end of the shaft is placed inside the housing and the proximal end of the shaft is placed outside the housing. This allows for placing some components of the drive formation inside the housing, where they are protected or sheltered from external elements.

In some embodiments, the torque transmission is in both the retracted position and the extended position, placed inside the housing.

In some embodiments, the shaft is a hollow shaft. The hollow can be used to translate axial movement from one side of the shaft to the other, for example via a sliding member inside the hollow, while the shaft itself does not move.

In some embodiments, the first coupling half and/or the second coupling half are at least partially configured inside the hollow shaft.

In some embodiments, a sliding member is placed inside the hollow shaft, configured to transfer translation from the second coupling half towards the distal end of the shaft, preferably the sliding member is placed inside the hollow shaft between the second coupling half and the release member.

In some embodiments, the contact surface of the first coupling half and the contact surface of the second coupling half comprises form congruent protrusions and/or indentations, preferably acute or triangular protrusions and/or indentations. Slip of such form congruent protrusions result in a translational movement of the coupling halves compared to each other.

In some embodiments, a second spring element press the first coupling half and the second coupling have together along their respective contact surfaces. The second spring element can be selected in function of the torque when the slip is desired.

In some embodiments, the secondary system is a system for converting torque to potential energy, stress, strain, tension and/or compression.

In some embodiments, the build-up of potential energy in the secondary system, results in slip occurring between the first coupling half and the second coupling half.

In some embodiments, the locking element is pivotably attached to the inside of the housing.

In some embodiments, the locking element comprises a hook, preferably configured to hook the distal end of the shaft, thereby preventing movement of the hollow shaft towards the retracted position.

In some embodiments, wherein the locking element is a pawl, preferably wherein the pawl locks behind the distal end of the shaft, when the shaft is manually extended.

In some embodiments, the locking element comprises a guiding member, configured to translate the translation of the second coupling half in a motion to unlock the locking element.

In some embodiments, the guiding member is an oblique surface, compared to the axial direction of the shaft. The guiding member may use the axial translation cause by the slip to move the locking element to an unlocked position, releasing the hollow shaft.

In some embodiments, the locking element at a first end is pivotally attached to the inside of the housing, and on the opposite end comprises a latch or a hook configured for engaging with the distal end of the shaft, in the extended position.

In some embodiments, the locking element extends further than the hook or the latch with an oblique surface or a guiding member.

In some embodiments, the translation of the second coupling half, results in a translation of a release-member beyond the distal end of the shaft, thereby interaction with the obliqui surface or the guiding member, causing the hook or latch to disengage with the shaft.

In some embodiments, the grip is revolutely attached to the proximal end of the shaft and axially fixed to the proximal end of the shaft. As the grip is revolutety attached to the shaft, rotation of the grip is transferred to the shaft, via the torque limiter, so that the grip can rotate idle compared to the shaft upon slip. As the grip is axially fixed to the shaft, the grip can not move axially upon slip, so the second coupling has to move upon slip, causing the required axial translation for unlocking.

In some embodiments, the secondary system comprises a spring, preferably a spiral spring. Such a spring or a spiral spring can store potential energy.

In some embodiments, the secondary system is a winding mechanism, preferably a winding mechanism for a strap, preferably a winding mechanism for a strap comprising spring.

In some embodiments, the grip is a knob, preferably a manually operatable knob.

In some embodiments, the torque transmission is a gear configured to mesh with a gear of the secondary system.

In some embodiments, the drive formation further comprises a comprises a direction limiter, which may prevent that the drive formation that torque is applied in the wrong direction.

In some embodiments, the drive formation further comprises a first axis, on which a worm screw is rotationally fixed, and on which a torque receiver is rotationally fixed, configures for receiving torque from the torque transmission.

In some embodiments, the drive formation further comprises a gear transmission, between the torque transmission and the secondary system.

In some embodiments, the secondary system is the selecting mechanism of a strap tensioning assembly, comprising:
- a strap;
- a retracting spool, formed by a barrel and at least a first flange, preferably wherein the retracting spool is configured for by default retracting the strap, thereby winding the strap around the barrel of the retracting spool;
- a ring gear, comprising gear teeth, preferably arranged in a circle; wherein the ring gear is attached to or integrated in the first flange;
- a worm screw, engageable and disengageable with the ring gear;
- a drive formation, for rotating the worm screw; and,
- a selecting mechanism, for engaging and disengaging the worm screw with the ring gear.

In some embodiments, the selecting mechanism comprises a torque receiver configured to engages with the torque transmission, and preferably wherein the torque receiver is rotationally fixed to the first axis, whereto the worm screw is rotationally fixed.

The invention provides further ins a strap tensioning assembly, comprising:
- a strap;
- a retracting spool, formed by a barrel and at least a first flange, preferably wherein the retracting spool is configured for by default retracting the strap, thereby winding the strap around the barrel of the retracting spool;
- a ring gear, comprising gear teeth, preferably arranged in a circle; wherein the ring gear is attached to or integrated in the first flange;
- a worm screw, engageable and disengageable with the ring gear;
- a drive formation according to an embodiment described herein, for rotating the worm screw; and,
- a selecting mechanism, for engaging and disengaging the worm screw with the ring gear.

As used herein "the engaged position of the worm screw" refers to a position of the worm screw relative to the ring gear, wherein the gear teeth of the ring gear may mesh with the worm screw. In other words, in the engaged position, rotation of the worm screw will result in rotation of the ring gear.

As used herein "the disengaged position of the worm screw" to a position of the worm screw relative to the ring gear, wherein the gear teeth of the ring gear do not mesh with the worm screw. In other words, in the engaged position, rotation of the worm screw will not result in rotation of the ring gear. Preferably, in the disengaged position, the ring gear is unhindered in rotation by the worm screw. Preferably, in the disengaged position the retracting spool will retract the strap, when no external force is being applied on the strap. Preferably, in the disengaged position the retracting spool will retract the strap under the influence of a spring in the retracting spool.

As used herein, the term "worm screw" refers to a screw like gear which may mesh with another gear, for example a worm wheel, to form a worm drive. An often-used synonym is the term "worm".

The strap tensioning assembly of the invention has the advantage that when the worm screw engages the with the ring gear, the strap tensioning assembly is self-locking, meaning that the retracting spool is locked in position and that the strap can neither unwind or upwind. This is caused by the ring gear being attached or integrated with the flange of the retracting spool. However, manipulation of the drive formation, may result in rotation of the worm screw in the engaged position, which will rotate the ring gear, and eventually will rotate the retracting spool, winding up the strap. This way, tension may be increased on the strap. Leaving the worm screw in the engaged position after the tension in the strap has been provided, results in a retention of the tension in the strap. The tension in the strap may be released by disengaging the worm screw from the ring gear, by the selecting mechanism. This will allow the retracting spool to rotate thereby releasing the tension in the strap.

In some embodiments, the lead angle of the worm screw is at least 1.0° to at most 15.0°, preferably at least 2.0° to at most 12.0°, preferably at least 3.0° to at most 10.0°, preferably at least 4.0° to at most 9.5°, preferably at least 5.0° to at most 9.0°, preferably at least 6.0° to at most 8.5°, preferably at least 7.0° to at most 8.0°, preferably at least 7.5 to at most 8.0°. Such lead angles make the worm screw and ring gear arrangement self-locking.

In some embodiments, the lead angle of the worm screw is at most 15.0°, preferably at most 12.0°, preferably at most 10.0°, preferably at most 9.5°, preferably at most 9.0°, preferably at most 8.5°, preferably at most 8.0°, preferably at most 7.5°.

In some embodiments, the lead angle of the worm screw is at least 1.0°, preferably at least 2.0°, preferably at least 3.0°, preferably at least 4.0°, preferably at least 5.0°, preferably at least 6.0°, preferably at least 7.0°, preferably at least 7.5.

In some embodiments, the worm screw and ring gear are self-locking.

More particular the invention provides in a strap tensioning assembly, comprising:
- a strap;
- a retracting spool, formed by a barrel and at least a first flange, preferably configured for by default retracting the strap, thereby winding the strap around the barrel of the retracting spool;
- a ring gear, comprising gear teeth, preferably arranged in a circle; wherein the ring gear is attached to or integrated in the first flange, and wherein the ring gear is concentrically arranged around the barrel; preferably wherein the ring gear is a bevel gear, more preferably a crown gear;
- a worm screw, engageable and disengageable with the ring gear;
- a drive formation according to an embodiment described herein, for rotating the worm screw; and,
- a selecting mechanism, for engaging and disengaging the worm screw with the ring gear.

As used herein a "spool" refers to a device on which the strap can be wound. A "reel" or a "bobbin" may be used as synonyms. A spool comprises a barrel, preferably a cylindrical barrel, around which the strap can be wound. At least on one side of the barrel a flange may be attached. The flange may serve as a guiding member, preventing the strap to be wound partially next to the barrel, or to be wound around an axis supporting the retracting spool or barrel. Preferably, the flange and the cylindrical part of the barrel, form a 90° angle.

Preferably, the retracting spool comprises a cylindrical barrel with a certain dimeter d1, and wherein one base of the cylinder forms the first flange with a diameter d2, wherein d2> d1. Preferably, the strap which is wound around the barrel over its whole length of the strap, will form a cylinder with a diameter d3 around the barrel. Preferably, d2 > d3 > d1. This means that that the first flange still extends beyond the strap, when the strap is complete wound around the barrel or when the strap is completely retracted.

The flange has two sides, a first side facing the worm gear, and the second side opposing the first side.

In some embodiments, the ring gear is concentrically arranged around the barrel of the retracting spool. Preferably, the ring gear is concentrically attached on the first flange or integrated in the first flange, around the barrel of the retracting spool. This has the advantage that rotation of the ring gear, directly rotates the retracting spool, and that tension in the strap can be achieved by the rotation of the retracting spool.

In some embodiments, the retracting spool is spring loaded, preferably wherein the retracting spool comprises a spiral spring or a torsion spring, preferably a spiral spring. In preferred embodiments, only the retracting spool comprises a spiral spring. The invention allows for such a configuration, which makes assembling the strap tensioning assembly much easier. In some embodiments, one end of the spiral spring or a torsion spring is attached to the spool and the other end is attached to a housing or the rigid cover, this may result in a rotation of the spool compared to the housing or the rigid cover, caused by the tension stored in the spring. Preferably, the spiral spring or a torsion spring is housed within the barrel of the retracting spool.

In some embodiments, the first flange is attached to a first side of the barrel. In some embodiments, the spool is formed by a barrel between a first flange and a second flange. In some embodiments, the spool is formed by a by a barrel with a first flange on one side, and wherein the spool is paced with the other side of the barrel against a housing. This has the advantage that the strap aligns with the barrel when wound around the retracting spool.

In some embodiments, the gear teeth of the ring gear are arranged along the edge, preferably the outer edge, of the first flange.

As used herein, the first flange has two sides:
- an interior facing side, the side of the first flange facing the barrel; and,
- an exterior facing side, the side facing away from the barrel.

In some embodiments, the gear teeth of the ring gear are arranged on the interior facing side of the first flange. The advantage thereof is that the thickness of the retracting spool including the ring gear can be minimised compared to when the gear teeth would be arranged on the exterior facing side. In some embodiments, when the gear teeth of the ring gear are arranged on the interior facing side of the first flange, and outside the zone which may be occupied by the strap, when fully retracted. This has the advantage that the gear teeth can overlap with the thickness of the strap so that the overall hight or thickness can be minimized.

In some embodiments, the gear teeth of the ring gear are arranged in a spokes pattern on the surface of the first flange, preferably on the interior facing side of the first flange.

In some embodiments, a worm drive arrangement in formed, when the worm screw is engaged with the ring gear. In some embodiments, the ring gear and the worm screw are configured to form a worm drive arrangement when engaged. This means that rotation of the worm screw around its central axis, is translated in rotation of the ring gear, which is attached to or integrated in the first flange of the retracting spool, so that the retracting spool will rotate around its central axis. In some embodiments, the gear teeth of the ring gear are configured to mesh with the worm screw.

In some embodiments, the ring gear is a worm wheel.

In some embodiments, the ring gear is a bevel wheel. As used herein, the term "bevel wheel" refer to a cog-wheel of which the working-face is oblique or perpendicular to the axis. Preferably, a bevel gear is a cog-wheel wherein one face of the wheel is a tooth bearing face. In some embodiments, the gear teeth of the bevel gear may be shaped according to a pitch cone of 90° or less.

In some embodiments, the ring gear is a crown wheel. As used herein the term "crown wheel" refers to a cog-wheel which has gear teeth that project at right angles to the face of the wheel. In particular, a crown wheel is a type of bevel wheel where the pitch cone angle is 90°.

As used herein the term "strap" refers to a strip of flexible material, such as cloth, suitable to fasten or secure, a load. Preferably, the strap has a rectangular cross-section and is wound around the barrel along its broadest side. Preferably the strap has a width of at least 10 mm, preferably at least 20 mm, preferably at least 30 mm, preferably at least 40 mm, preferably at least 50 mm, preferably at least 60 mm. The strap may for example be made from nylon or Kevlar.

In some embodiments, a first end of the strap is attached to the barrel. Preferably, the barrel of the retracting spool comprises a slot, wherethrough the first end of the strap can be inserted and preferably be secured in the lumen of the barrel.

In some embodiments the barrel and/or the retracting spool may be made from a polymer or form a metal, such as steel.

In some embodiments, a second end of the strap is attached to a fastener, such as a hook or a bracket. The fastener can be used to secure the second end of the strap to a pallet or to a load on the pallet.

In some embodiments, the drive formation comprises a handle, a knob or crank, preferably a manually operatable handle, knob or crank. Preferably, the handle or the knob is configured to transfer rotation of the handle, the knob or crank to rotation of the worm screw. In some embodiments, a gear train is placed between worm screw and the handle, the knob or crank.

In some embodiments, the selecting mechanism comprise a first axis, whereon the worm screw is rotationally fixed, and wherein the first axis is moveable arranged in the assembly, between at least a first position and a second position.

In some embodiments, in the first position, the worm screw can engage with the gear teeth of the ring gear, and in the second position, the worm screw cannot engage with the gear teeth of the ring gear.

In some embodiments, the selecting mechanism comprise locking mechanism, for locking the worm screw in the first position. In some embodiments, the locking mechanism comprise a rotatable cam and a slot for engaging the cam. Preferably, rotation of the cam results in snapping of the cam in the slot. Preferably, the sides of the slot are aligned with one or more protrusions, to reversibly secure the cam in the slot. Preferably, rotation of the cam allows for the cam to snap over the one or more protrusion.

In some embodiments, engagement of the cam with the slot, results in a movement of the worm screw to the first position or the engaged position.

In some embodiments, disengagement of the cam with the slot, results in a movement of the worm screw to the second position or the disengaged position.

In some embodiments, the cam is rotatable mounted around the first axis of the worm screw. This way, the cam can be used to move the position of the first axis, from the first position to the second position and *vice versa.*

In some embodiments, the cam is rotatable fixed to a sleeve around the first axis of the worm screw, preferably wherein the sleeve can rotate around the first axis.

Preferably, the sleeve is rotatable fixed to a knob, handle or a lever. Manipulation of the knob, handle or lever may rotate the sleeve, and the cam which is rotatable fixed on the sleeve, thereby moving the axis first axis or the worm screw form the first position or the engaged position to the second position or the disengaged position and *vice versa.* In some embodiments, a lever is rotationally fixed to the sleeve, for rotating the sleeve and cam, preferably around the first axis.

In some embodiments, the selecting mechanism comprises a spring, wherein the spring favours the worm screw in the disengaged position or the first axis in the second position. Preferably, the latching mechanism can overcome the force exerted by the spring, so that the latching mechanism can lock the worm screw in the engaged position or the first axis in the first position.

In some embodiments, the drive formation comprises a torque limiter. The torque limiter may limit the amount of torque that can be transferred from the handle, the knob or crank to the worm screw, which may prevent damage of the strap tensioning assembly by the operator.

In some embodiments, the drive formation comprises a direction limiter. The direction limiter may prevent the operator to turn the retracting spool in the unwind direction, which may prevent unwinding of the strap and entanglement of the trap inside the strap tensioning assembly.

In some embodiments, a strap guiding element pivots the strap from an axial position to a transvers position, in relationship to the barrel of the spool. The guiding element may prevent the strap to wind around the retracting spool in a wrong orientation. The guiding element may also prevent the fastener on the strap to enter the strap tensioning assembly.

In some embodiments, the first flange extends beyond the zone occupied by the strap, when the strap is completely retracted by the spool.

In some embodiments, the ring gear is arranged on the first flange, in the zone extending pass the zone occupied by the strap, when the strap is completely retracted by the spool.

In some embodiments, the height of the barrel is equal to or larger than the width of the strap.

In some embodiments, the drive formation is suitable for manually or electronically rotating the worm screw.

In some embodiments, the drive formation comprises a gear transmission, preferably a gear reduction between the handle, the knob or crank and the worm screw.

In some embodiments, the handle, the knob or the crank is retractable and/or extendable. This allows for a better manipulation of the handle, the knob or the crank, and may provide protection of the handle, the knob or the crank, when not in use. Preferably, the handle, the knob or crank is placed in a recess when not in use, and can be extended so that the handle, the knob or the crank extends from the recess for manipulation.

In some embodiments the handle, the knob or the crank is rotationally fixed to a second axis, whereas the worm screw is rotationally fixed to a second axis; and wherein a gear transmission is configured to translate rotation of the second axis to the first axis.

In some embodiments, the retracting spool and/or the first flange may be made from polypropylene, polyethylene, polystyrene, Acrylonitrile Butadiene Styrene (ABS), polycarbonate (PC), polymethyl methacrylate (PMMA), polyoxymethylene (POM) or polyamide, preferably polypropylene.

In some embodiments, the worm screw may be made from polyethylene, polystyrene, Acrylonitrile Butadiene Styrene (ABS), polycarbonate (PC), polymethyl methacrylate (PMMA), polyoxymethylene (POM) or polyamide, preferably polypropylene.

The invention further provides in a rigid cover comprising one or more the strap tensioning assembly according to an embodiment described herein.

In some embodiments, the rigid cover is suitable for use on palletised loads. The strap tensioning assemblies may be used to secure the rigid cover to the load or to the pallet.

In some embodiments, the rigid cover comprises at least two, preferably at least four, strap tensioning assemblies according to an embodiment described herein.

In some embodiments, the strap tensioning assemblies are at least partially encased in the rigid cover. In some embodiments, the strap tensioning assemblies at least partially placed inside cavity in the rigid cover.

In some embodiments, the strap tensioning assemblies are positioned in the rigid cover, in a way that the strap extends from the sides of the rigid cover.

The invention further provides in a pallet, comprising one or more the strap tensioning assembly according to an embodiment described herein.

In some embodiments, the pallet comprises at least two, preferably at least four, strap tensioning assemblies according to an embodiment described herein.

In some embodiments, the invention provides in a box, comprising a rigid cover according to an embodiment described herein.

The invention provides further in an article, preferably a packaging article comprising a strap tensioning assembly according to an embodiment described herein. Preferably, the article is a rigid cover, a pallet or a box as described herein.

In some embodiments, the article comprises at least two, preferably at least four, strap tensioning assemblies according to an embodiment described herein.

The following examples serve to merely illustrate the invention and should not be construed as limiting its scope in any way. While the invention has been shown in only some of its forms, it should be apparent to those skilled in the art that it is not so limited, but is susceptible to various changes and modifications without departing from the scope of the invention as defined by the claims.

### EXAMPLES

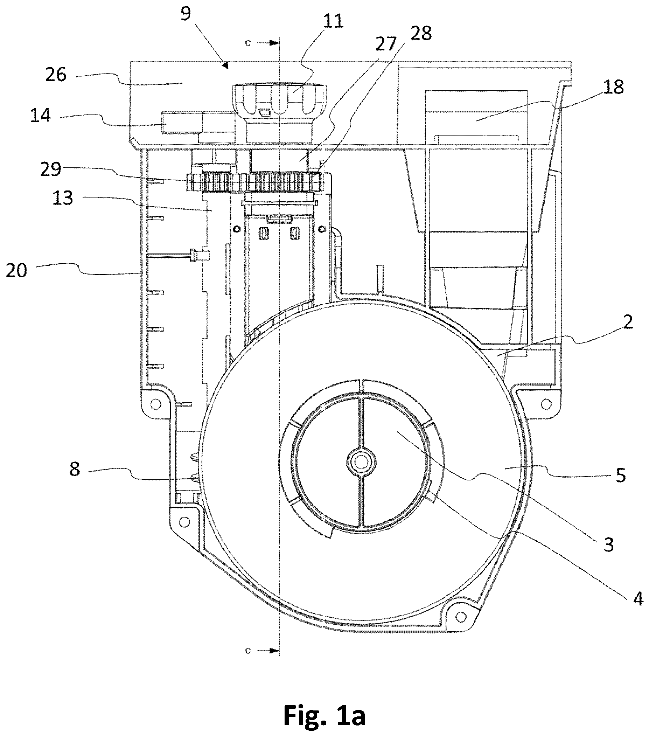

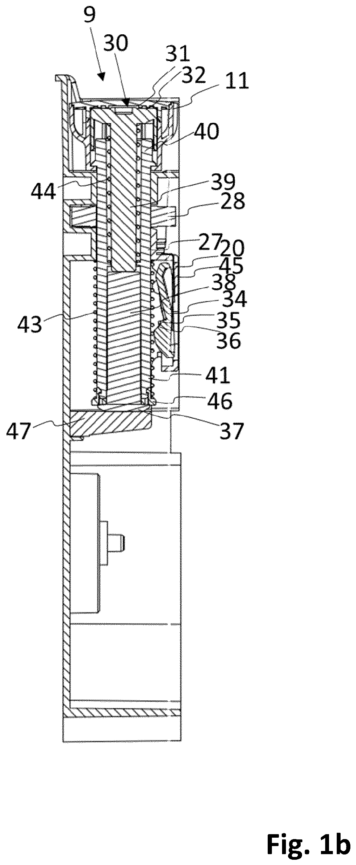

**Figure 1a** **and** **Figure 1b****,** depict a strap tensioning assembly (1) according to an embodiment of the invention. These figures are intended to show the drive formation (9), which comprises a shaft (27), in these figures placed in the retracted position, wherein the grip (11) is retracted in a recess (26). A gear serving as a torque transmission (28) is rotationally fixed to the shaft (27) and meshes with the gear, which serves a torque receiver (29) rotationally fixed on the first axis (not visible). The first axis is positioned inside hollow sleeve (13) and drives the worm screw (8) which is rotationally fixed to the first axis. Engaging the worm wheel and disengaging the worm screw (8) with the teeth of the ring gear (not visible) on the first flange (5) can be done by manipulating handle (14) as in the previous embodiments. Rotation of the flange (5) will provide tension in the strap (2), which is wound around the barrel (4) of the retracting spool (3). The strap (2) has a hook (18) on one end, for securing loads to a pallet.

Figure 1B is a cross-section of the embodiment shown in Figure 1a, through the drive formation (9) in the retracted position. A grip (11) is revolutely attached to the proximal end (40) of the shaft (27). The inside of the grip forms the first coupling half (31) of a torque limiter (30), which forms a slip coupling with the second coupling half (32) which extends (39) into the hollow shaft (27), and is pressed together by the second spring element (44). A torque transmission (28) is rotationally fixed to the outside of the shaft (27). In this retracted position the locking element (34), comprising a latch (35) and a guiding member (36), which does not engage with the distal end of the shaft (27), does not engage with the spring lock (46) or does not engage with the release member (37), which itself is positioned on the end surface of the sliding member (38) inside the hollow shaft (27). The spring lock (46) locks the first spring element (43), which favours the retracted position, in place at the distal end (41) of the shaft (27). The other side of the first spring element is anchored against the housing (20).

Stop element (47) prevents further retraction of the shaft (27).

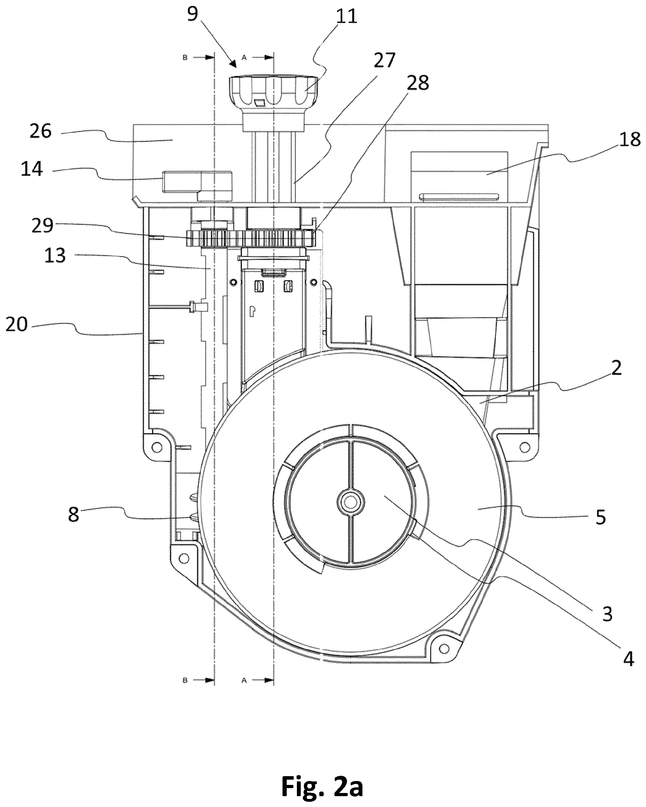

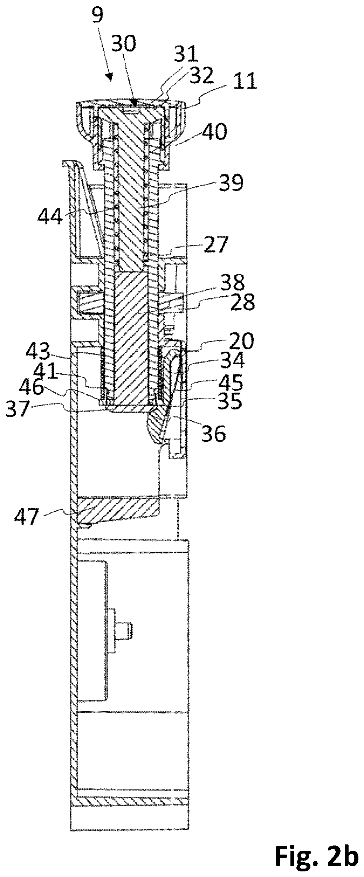

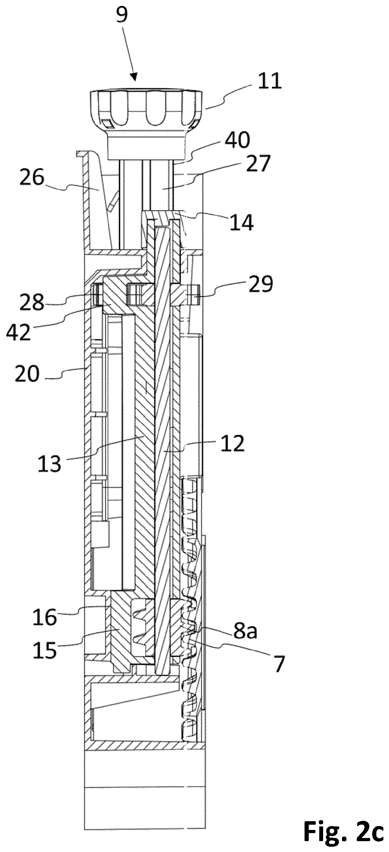

**Figure 2a****,** **Figure 2b** **and** **Figure 2c****,** depict the same embodiment as shown in Figure 1a and 1b, however with the drive formation in the extended position.

Compared to figure 1b, it can be seen in Figure 2b that in the extended position, the locking element (34), latches, under the influence of leaf spring (45), on to the corner of the hollow shaft (27) by a latch (35), this prevents the hollow shaft from returning to the retracted position. If an operator turns the grip (11), torque will be transferred via torque limiter (30), trough the hollow shaft (27) and trough the torque transmission (28) to the torque receiver (29) and so on to eventually winding of the retracting spool (3) thereby building up tension in the strap (2) until the tension in the strap succeeds a certain value, so that the torque limiter (30) will slip. Due to triangular protrusions on the interface between the first coupling half (31) and the second coupling half (32), the second coupling halve (32) will move in the axial direction of the shaft (27), as the grip (and so the first coupling half) is axially locked in relation to the shaft (27). The movement of the second coupling half (32) is transferred through the hollow shaft (27) by sliding member (39) and (38). The end of the sliding member (38), functions as a release member (37) which upon movement will engage with guiding member (36) and make locking element (34) to pivot, so that the hook (35) disengages with the hollow shaft (27) or the spring lock (46). This allows the first spring element (43) to move the hollow shaft (27) back to the retracted position.

Figure 2c shows a cross-section along the selecting mechanism, wherein the worm gear (8a) is in the engaged position with the teeth (7) of the ring gear. This position is selected by rotation of lever (14), which result in the rotation of sleeve (13) around the first axis (12), and thereby engaging cam (15) with slot (16) pushing the worm gear in the engaged position. In this example a second cam (42) is present, ensuring engagement of the torque transmission (28) and the torque receiver (29).

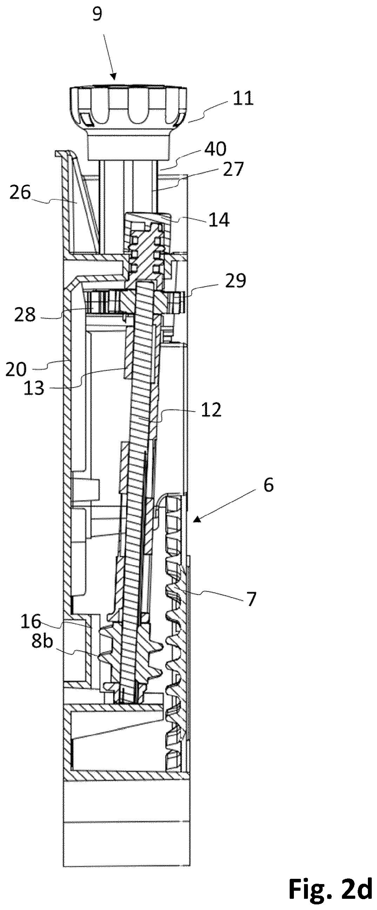

Figure 2d shows a cross-section along the selecting mechanism, wherein the worm gear (8b) is in the disengaged position with the teeth (7) of the ring gear. This position is selected by rotation of lever (14), which result in the rotation of sleeve (13) around the first axis (12), and thereby disengaging cam (15, not visible) from slot (16) allowing the worm gear to go to the disengaged position, optional; aided by a spring element such as a leaf spring. Upon disengagement from the worm screw, the retracting spool may wind up the strap under the influence of the spiral spring inside the retracting spool.

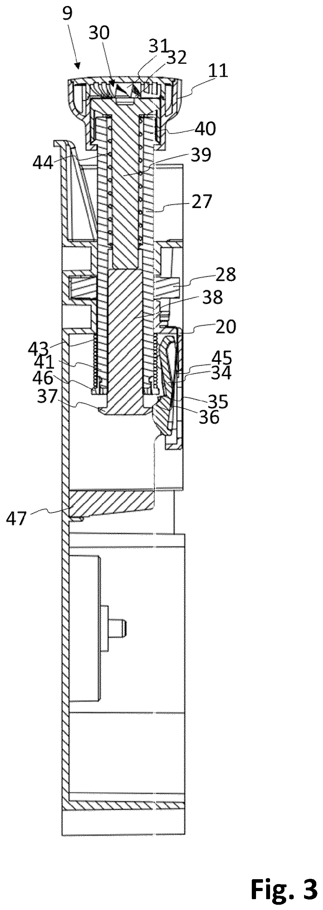

**Figure 3** depict the same embodiment as shown in Figure 1a and 1b and in Figure 2a, 2b, 2c and 2d, however the drive formation is shown at the moment slip occurs in slip coupling between the first coupling half (31) and the second coupling half (32) in the torque limiter (30), which creates a movement in the axial direction of the shaft (27), due to the triangular teeth on the interface between the two coupling halves (31, 32). This movement is translated via the extended part (39) of the second coupling half and the sliding member (38), to the release member (37) which engages with the guiding member (36) of the locking element thereby releasing the shaft (27). As the sliding member (38) is not attached to the second coupling half, the sliding member can remain extended even after the slip occurred (which is only in short pulse), the extended sliding member (38) makes sure the disengagement of the locking element (34) remains after the pulse of the slip. The stop element (47) pushes the sliding member back into the shaft (27), upon retraction of the shaft (27).

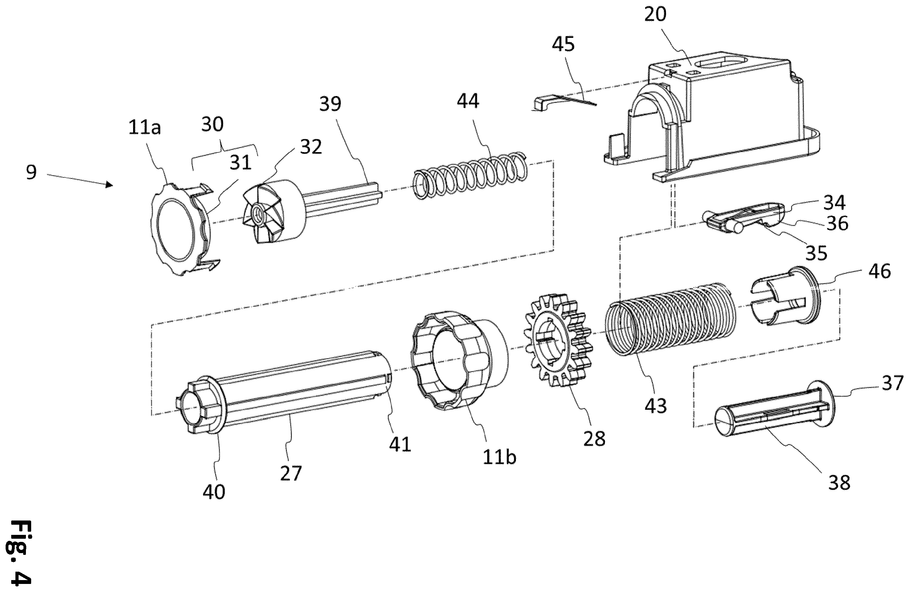

**Figure 4** depicts an exploded view of the drive formation depicted in in Figure 1a and 1b, Figure 2a, 2b, 2c, and 2d and Figure 3 As shown in the figure, the handle is made from two halves (11a and 11b).

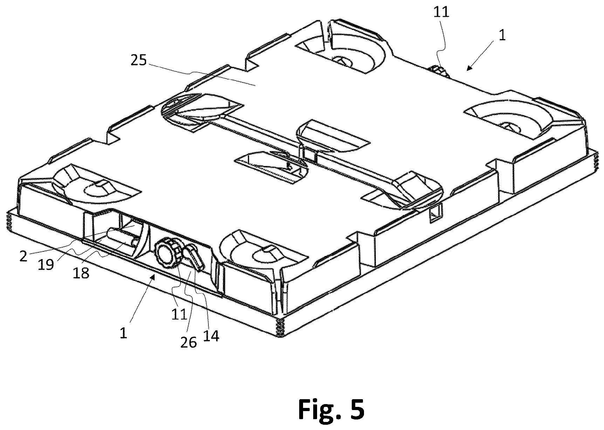

**Figure 5** shows a perspective view of a rigid cover (25) comprising two strap tensioning assemblies (1) according to an embodiment of the invention. The strap tensioning assemblies (1) are mounted inside the rigid cover, apart from the strap (2), the hook (18), the guiding element (19), which ensures that the strap (2) is not twisted when retracted into the rigid cover (25). Furthermore, the knob (11) and the lever (14) are placed in a recess (26) in the side of the rigid cover (25), which may avoid damaging, but are still reachable for an operator, to tighten the strap by rotating the knob (11) or to engage or disengage the worm screw (8) by manipulating the lever (14).

## Claims

1. A drive formation (9), comprising:
- a housing (20);
- a shaft (27), comprising a proximal end (40) placed outside the housing (20), and a distal end (41) placed inside the housing (20);
wherein the shaft (27) is axially movable between a retracted position and an extended position;
- a grip (11), revolutely attached to the proximal end (40) of the shaft (27);
- a torque transmission (28), rotationally fixed to the shaft (27), wherein the torque transmission (28) is configured to transfer torque to a secondary system;
- a locking element (34), configured for locking the shaft (27) in the extended position;
**characterized in that**,
the drive formation (9) further comprising:
- a first spring element (43), configured for favouring the shaft (27) in the retracted position;
- a torque limiter (30), wherein the torque limiter (30) comprises a slip coupling between a first coupling half (31) and a second coupling half (32);
wherein the first coupling half (31) is rotationally fixed to the grip (11);
wherein the second coupling half (32) is rotationally fixed to the shaft (27);
wherein slip of the torque limiter (30) causes translation of the second coupling half (32) relative to the first coupling half (31) in a direction along the axis of the shaft (27); and,
wherein the second coupling half (32) is configured to, upon axial movement, unlock the locking element (34), thereby causing the first spring element (43) to move the shaft (27) towards the retracted position.

2. The drive formation (9) according to claim 1, wherein the shaft (27) is a hollow shaft.

3. The drive formation (9) according to claim 2, wherein the first coupling half (31) and/or the second coupling half (32) are at least partially configured inside the hollow shaft (27) .

4. The drive formation (9) according to claims 2 or 3, wherein a sliding member (38) is placed inside the hollow shaft (27), configured to transfer translation from the second coupling half (32) towards the distal end (41) of the shaft (27).

5. The drive formation (9) according to any one previous claims, wherein the contact surface of the first coupling half (31) and the contact surface of the second coupling half (32) comprises form congruent protrusions and/or indentations, preferably acute or triangular protrusions and/or indentations.

6. The drive formation (9) according to any one previous claims, wherein a second spring element (44) presses the first coupling half (31) and the second coupling half (32) together along their respective contact surfaces.

7. The drive formation (9) according to any one previous claims, wherein the locking element (34) is pivotably attached to the inside of the housing (20).

8. The drive formation (9) according to any of the claims 2 to 7, wherein the locking element (34) comprises a hook (35), configured to hook the distal end (41) of the shaft (27), thereby preventing movement of the hollow shaft (27) towards the retracted position.

9. The drive formation (9) according to any one previous claims, wherein the locking element (34) comprises a guiding member (36), configured to translate the translation of the second coupling half (32) in a motion to unlock the locking element (34).

10. The drive formation (9) according to any one previous claims, wherein the translation of the second coupling half (32), results in a translation of a release-member beyond the distal end (41) of the shaft (27), thereby interaction with the obliqui surface or the guiding member (36), causing the hook (35) or latch to disengage with the shaft (27).

11. The drive formation (9) according to any one previous claims, wherein the grip (11) is revolutely attached to the proximal end (40) of the shaft (27) and axially fixed to the proximal end (40) of the shaft (27).

12. A strap tensioning assembly (1), comprising:
- a strap (2);
- a retracting spool (3), formed by a barrel (4) and at least a first flange (5), preferably wherein the retracting spool (3) is configured for by default retracting the strap (2), thereby winding the strap (2) around the barrel (4) of the retracting spool;
- a ring gear (7), comprising gear teeth, preferably arranged in a circle; wherein the ring gear (7) is attached to or integrated in the first flange (5);
- a worm screw (8), engageable and disengageable with the ring gear (7);
- a drive formation (9) according to any one of claim 1 to 11, for rotating the worm screw (8); and,
- a selecting mechanism, for engaging and disengaging the worm screw (8) with the ring gear (7).

13. A rigid cover (15) comprising one or more the strap tensioning assemblies (1) according to claim 12.

14. A pallet comprising one or more the strap tensioning assemblies (1) according to claim 12.

15. A box, comprising a rigid cover according to claim 13.

## Patentansprüche

1. Antriebsstruktur (9), die Folgendes umfasst:
- ein Gehäuse (20);
- eine Welle (27), die ein proximales Ende (40), das außerhalb des Gehäuses (20) platziert ist, und ein distales Ende (41), das innerhalb des Gehäuses (20) platziert ist, umfasst;
wobei die Welle (27) axial zwischen einer eingefahrenen Position und einer ausgefahrenen Position beweglich ist;
- einen Griff (11), der drehbar an dem proximalen Ende (40) der Welle (27) befestigt ist;
- eine Drehmomentübertragung (28), die drehfest an der Welle (27) fixiert ist, wobei die Drehmomentübertragung (28) dazu ausgebildet ist, Drehmoment auf ein sekundäres System zu übertragen;
- ein Verriegelungselement (34), das zum Verriegeln der Welle (27) in der ausgefahrenen Position ausgebildet ist;
**dadurch gekennzeichnet, dass**
die Antriebsstruktur (9) ferner Folgendes umfasst:
- ein erstes Federelement (43), das dazu ausgebildet ist, die Welle (27) in die eingefahrenen Position vorzuspannen;
- einen Drehmomentbegrenzer (30), wobei der Drehmomentbegrenzer (30) eine Schlupfkupplung zwischen einer ersten Kupplungshälfte (31) und einer zweiten Kupplungshälfte (32) umfasst;
wobei die erste Kupplungshälfte (31) drehfest an dem Griff (11) befestigt ist;
wobei die zweite Kupplungshälfte (32) drehfest an der Welle (27) befestigt ist;
wobei ein Schlupf des Drehmomentbegrenzers (30) eine Verschiebung der zweiten Kupplungshälfte (32) relativ zu der ersten Kupplungshälfte (31) in einer Richtung entlang der Achse der Welle (27) bewirkt; und
wobei die zweite Kupplungshälfte (32) dazu ausgebildet ist, bei einer axialen Bewegung das Verriegelungselement (34) zu entriegeln, wodurch bewirkt wird, dass das erste Federelement (43) die Welle (27) in Richtung der eingefahrenen Position bewegt.

2. Antriebsstruktur (9) nach Anspruch 1, wobei die Welle (27) eine Hohlwelle ist.

3. Antriebsstruktur (9) nach Anspruch 2, wobei die erste Kupplungshälfte (31) und/oder die zweite Kupplungshälfte (32) zumindest teilweise innerhalb der Hohlwelle (27) ausgebildet sind.

4. Antriebsstruktur (9) nach Anspruch 2 oder 3, wobei ein Gleitelement (38) innerhalb der Hohlwelle (27) platziert ist, das dazu ausgebildet ist, eine Verschiebung von der zweiten Kupplungshälfte (32) in Richtung des distalen Endes (41) der Welle (27) zu übertragen.

5. Antriebsstruktur (9) nach einem der vorhergehenden Ansprüche, wobei die Kontaktfläche der ersten Kupplungshälfte (31) und die Kontaktfläche der zweiten Kupplungshälfte (32) formkongruente Vorsprünge und/oder Vertiefungen, vorzugsweise spitze oder dreieckige Vorsprünge und/oder Vertiefungen, umfassen.

6. Antriebsstruktur (9) nach einem der vorhergehenden Ansprüche, wobei ein zweites Federelement (44) die erste Kupplungshälfte (31) und die zweite Kupplungshälfte (32) entlang ihrer jeweiligen Kontaktflächen aneinander drückt.

7. Antriebsstruktur (9) nach einem der vorhergehenden Ansprüche, wobei das Verriegelungselement (34) schwenkbar an der Innenseite des Gehäuses (20) befestigt ist.

8. Antriebsstruktur (9) nach einem der Ansprüche 2 bis 7, wobei das Verriegelungselement (34) einen Haken (35) umfasst, der dazu ausgebildet ist, das distale Ende (41) der Welle (27) festzuhaken, wodurch eine Bewegung der Hohlwelle (27) in Richtung der eingefahrenen Position verhindert wird.

9. Antriebsstruktur (9) nach einem der vorhergehenden Ansprüche, wobei das Verriegelungselement (34) ein Führungselement (36) umfasst, das dazu ausgebildet ist, die Verschiebung der zweiten Kupplungshälfte (32) in eine Bewegung zum Entriegeln des Verriegelungselements (34) zu verschieben.

10. Antriebsstruktur (9) nach einem der vorhergehenden Ansprüche, wobei die Verschiebung der zweiten Kupplungshälfte (32) zu einer Verschiebung eines Freigabeelements über das distale Ende (41) der Welle (27) hinaus führt, wodurch eine Wechselwirkung mit der schrägen Fläche oder dem Führungselement (36) entsteht, wodurch bewirkt wird, dass sich der Haken (35) oder der Riegel von der Welle (27) löst.

11. Antriebsstruktur (9) nach einem der vorhergehenden Ansprüche, wobei der Griff (11) umdrehend an dem proximalen Ende (40) der Welle (27) befestigt und axial an dem proximalen Ende (40) der Welle (27) fixiert ist.

12. Riemenspannanordnung (1), die Folgendes umfasst:
- einen Riemen (2);
- eine Einzugsspule (3), die durch einen Zylinder (4) und mindestens einen ersten Flansch (5) gebildet ist, wobei die Einzugsspule (3) vorzugsweise dazu ausgebildet ist, den Riemen (2) standardmäßig einzuziehen, wodurch der Riemen (2) um den Zylinder (4) der Einzugsspule gewickelt wird;
- ein Hohlrad (7), das Zahnradzähne umfasst, die vorzugsweise in einem Kreis angeordnet sind; wobei das Hohlrad (7) an dem ersten Flansch (5) befestigt oder in diesen integriert ist;
- eine Schneckenschraube (8), die mit dem Hohlrad (7) in Eingriff bringbar und von diesem lösbar ist;
- eine Antriebsstruktur (9) nach einem der Ansprüche 1 bis 11 zum Drehen der Schneckenschraube (8); und
- einen Wählmechanismus zum Ineingriffbringen und Lösen der Schneckenschraube (8) mit dem Hohlrad (7).

13. Starre Abdeckung (15), die eine oder mehrere der Riemenspannanordnungen (1) nach Anspruch 12 umfasst.

14. Palette, die eine oder mehrere der Riemenspannanordnungen (1) nach Anspruch 12 umfasst.

15. Kiste, die eine starre Abdeckung nach Anspruch 13 umfasst.

## Revendications

1. Formation d'entraînement (9), comprenant :
- un boîtier (20) ;
- un arbre (27), comprenant une extrémité proximale (40) placée à l'extérieur du boîtier (20) et une extrémité distale (41) placée à l'intérieur du boîtier (20) ;
l'arbre (27) étant mobile axialement entre une position rétractée et une position étendue ;
- une poignée (11), attachée de manière pivotante à l'extrémité proximale (40) de l'arbre (27) ;
- une transmission de couple (28), fixée en rotation à l'arbre (27), la transmission de couple (28) étant conçue pour transférer un couple à un système secondaire ;
- un élément de verrouillage (34), conçu pour verrouiller l'arbre (27) dans la position étendue ; **caractérisée en ce que**
la formation d'entraînement (9) comprend en outre :
- un premier élément ressort (43), conçu pour favoriser l'arbre (27) dans la position rétractée ;
- un limiteur de couple (30), le limiteur de couple (30) comprenant un accouplement à glissement entre une première moitié d'accouplement (31) et une seconde moitié d'accouplement (32) ;
la première moitié d'accouplement (31) étant fixée en rotation à la poignée (11) ;
la seconde moitié d'accouplement (32) étant fixée en rotation à l'arbre (27) ;
le glissement du limiteur de couple (30) entraînant la translation de la seconde moitié d'accouplement (32) par rapport à la première moitié d'accouplement (31) dans une direction le long de l'axe de l'arbre (27) ; et,
la seconde moitié d'accouplement (32) étant conçue pour, lors d'un mouvement axial, déverrouiller l'élément de verrouillage (34), amenant ainsi le premier élément de ressort (43) à déplacer l'arbre (27) vers la position rétractée.

2. Formation d'entraînement (9) selon la revendication 1, l'arbre (27) étant un arbre creux.

3. Formation d'entraînement (9) selon la revendication 2, la première moitié d'accouplement (31) et/ou la seconde moitié d'accouplement (32) étant au moins partiellement conçues à l'intérieur de l'arbre creux (27).

4. Formation d'entraînement (9) selon la revendication 2 ou 3, un élément coulissant (38) étant placé à l'intérieur de l'arbre creux (27), conçu pour transférer la translation de la seconde moitié d'accouplement (32) vers l'extrémité distale (41) de l'arbre (27).

5. Formation d'entraînement (9) selon l'une quelconque des revendications précédentes, la surface de contact de la première moitié d'accouplement (31) et la surface de contact de la seconde moitié d'accouplement (32) comprenant des saillies et/ou des indentations à congruence de forme, de préférence des saillies et/ou des indentations aiguës ou triangulaires.

6. Formation d'entraînement (9) selon l'une quelconque des revendications précédentes, un second élément ressort (44) pressant la première moitié d'accouplement (31) et la seconde moitié d'accouplement (32) ensemble le long de leurs surfaces de contact respectives.

7. Formation d'entraînement (9) selon l'une quelconque des revendications précédentes, l'élément de verrouillage (34) étant fixé de manière pivotante à l'intérieur du boîtier (20).

8. Formation d'entraînement (9) selon l'une quelconque des revendications 2 à 7, l'élément de verrouillage (34) comprenant un crochet (35), conçu pour accrocher l'extrémité distale (41) de l'arbre (27), empêchant ainsi le mouvement de l'arbre creux (27) vers la position rétractée.

9. Formation d'entraînement (9) selon l'une quelconque des revendications précédentes, l'élément de verrouillage (34) comprenant un élément de guidage (36), conçu pour translater la translation de la seconde moitié d'accouplement (32) dans un mouvement pour déverrouiller l'élément de verrouillage (34).

10. Formation d'entraînement (9) selon l'une quelconque des revendications précédentes, la translation de la seconde moitié d'accouplement (32) entraînant une translation d'un élément de libération au-delà de l'extrémité distale (41) de l'arbre (27), interagissant ainsi avec la surface oblique ou l'élément de guidage (36), amenant le crochet (35) ou le verrou à se séparer de l'arbre (27).

11. Formation d'entraînement (9) selon l'une quelconque des revendications précédentes, la poignée (11) étant attachée de manière pivotante à l'extrémité proximale (40) de l'arbre (27) et fixée axialement à l'extrémité proximale (40) de l'arbre (27).

12. Ensemble de tension de sangle (1), comprenant :
- une sangle (2) ;
- une bobine rétractable (3), formée par un cylindre (4) et au moins une première bride (5), de préférence la bobine rétractable (3) étant conçue pour rétracter par défaut la sangle (2), enroulant ainsi la sangle (2) autour du cylindre (4) de la bobine rétractable ;
- une couronne (7), comprenant des dents d'engrenage disposées de préférence en cercle ; la couronne (7) étant fixée ou intégrée à la première bride (5) ;
- une vis sans fin (8), pouvant venir en prise avec la couronne (7) et se séparer de celle-ci ;
- une formation d'entraînement (9) selon l'une quelconque des revendications 1 à 11, pour entraîner en rotation la vis sans fin (8) ; et,
- un mécanisme de sélection, pour mettre en prise la vis sans fin (8) avec la couronne (7) et la séparer de celle-ci,

13. Couvercle rigide (15) comprenant un ou plusieurs ensembles de tension de sangle (1) selon la revendication 12.

14. Palette comprenant un ou plusieurs ensembles de tension de sangle (1) selon la revendication 12.

15. Boîte, comprenant un couvercle rigide selon la revendication 13.
